(19) Europäisches Patentamt
European Patent Office
Office européen des brevets

(11) **EP 1 932 582 A1**

(12) **EUROPEAN PATENT APPLICATION**
published in accordance with Art. 153(4) EPC

(43) Date of publication:
**18.06.2008 Bulletin 2008/25**

(51) Int Cl.:
**B01D 71/34** (2006.01)　　**B01D 69/08** (2006.01)
**D01D 5/247** (2006.01)　　**D01F 6/12** (2006.01)

(21) Application number: **06797835.3**

(22) Date of filing: **12.09.2006**

(86) International application number:
**PCT/JP2006/318028**

(87) International publication number:
**WO 2007/032331 (22.03.2007 Gazette 2007/12)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.09.2005 JP 2005266279**

(71) Applicant: **Kureha Corporation**
**Tokyo 103-8552 (JP)**

(72) Inventors:
 • **TAKAHASHI, Takeo**
  **Ibaraki-Ken 311-3436 (JP)**
 • **TADA, Yasuhiro**
  **Ibaraki-Ken 311-3436 (JP)**
 • **SUZUKI, Kenichi**
  **Tokyo 103-8552 (JP)**
 • **HINO, Masayuki**
  **Ibaraki-Ken 311-3436 (JP)**
 • **MIZUNO, Toshiya**
  **Ibaraki-Ken 311-3436 (JP)**

(74) Representative: **Albrecht, Thomas**
  **Kraus & Weisert**
  **Patent- und Rechtsanwälte**
  **Thomas-Wimmer-Ring 15**
  **80539 München (DE)**

(54) **VINYLIDENE FLUORIDE RESIN HOLLOW FIBER POROUS MEMBRANE AND METHOD FOR PRODUCTION THEREOF**

(57)　A hollow-fiber porous membrane comprising a hollow-fiber form of vinylidene fluoride resin and satisfying the following properties (A) and (B), is provided as a hollow-fiber porous membrane of vinylidene fluoride resin having an average pore size and a further uniform pore size distribution (A) and a large water permeation rate regardless of good efficiency of blocking minute particles (bacteria) (B), as represented by: (A) a ratio Pmax (1 m) /Pm of at most 4.0 between a maximum pore size Pmax (1 m) measured at a test length of 1 m according to the bubble point method and an average pore size Pm of 0.05 - 0.20 $\mu$m measured according to the half dry method; and (B) a ratio F (L = 200 mm, v = 70 %)/Pm$^2$ of at least 3000 (m/day·$\mu$m$^2$), wherein the ratio F (L = 200 mm, v = 70 %)/Pm$^2$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a square Pm$^2$ of an average pore size Pm. The hollow-fiber porous membrane is produced by a process, comprising: subjecting a stretched hollow-fiber porous membrane of vinylidene fluoride resin to at least two stages of relaxation treatment in a non-wetting environment.

**Description**

TECHNICAL FIELD

The present invention relates to a hollow-fiber porous membrane (hollow fiber-form porous membrane) of vinylidene fluoride resin excellent in water (filtration) treatment performances, and a process for production thereof.

BACKGROUND ART

Vinylidene fluoride resin is excellent in chemical resistance, heat resistance and mechanical strength and, therefore, has been studied with respect to application thereof to porous membranes for separation. In the case of use for water (filtration) treatment, particularly for production of potable water or sewage treatment, a hollow fiber-form porous membrane is frequently used because it can easily provide a large membrane area per unit volume of filtration apparatus, and many proposals have been made including processes for production thereof (e.g., Patent documents 1-3 listed below).

Also, the present inventors, et al., have found that a process of melt-extruding a vinylidene fluoride resin having a specific molecular weight characteristic together with a plasticizer and a good solvent for the vinylidene fluoride resin into a hollow fiber-form and then removing the plasticizer by extraction to render the hollow fiber porous is effective for formation of a porous membrane of vinylidene fluoride resin having minute pores of appropriate size and distribution and also excellent in mechanical strength, and have made a series of proposals (Patent document 4 listed below, etc.). However, a strong demand exists for further improvements of overall performances including filtration performances and mechanical performances of the hollow-fiber porous membrane necessary for use as a filtration membrane. It is particularly desired to have pores having appropriate sizes for removing particles to be removed and a further uniform distribution, in addition to a large water permeation rate (filtration performance).

For example, the present inventors, et al. have found that the relaxation treatment of a stretched porous membrane of vinylidene fluoride resin under a wetting condition in a liquid which wets the porous membrane of vinylidene fluoride resin causes a great effect in increasing the water permeation rate of the resultant porous membrane of vinylidene fluoride resin and have proposed a process for producing a hollow-fiber porous membrane of vinylidene fluoride resin (Patent document 5). However, according to a result of the present inventors' study, it has been found that the hollow-fiber porous membrane of vinylidene fluoride resin obtained through the process, while it actually has a remarkably increased water permeation rate, is liable to show a pore size distribution including a main peak and also another small sub-peak on a larger pore size side of the main peak and is further liable to have pinholes leading to a lowering in performance of removing minute particles or bacteria during water (filtration) treatment.

Patent document 1 : JP-A 63-296939
Patent document 2 : JP-A 63-296940
Patent document 3 : = JP-A 3-215535
Patent document 4 : WO2004/081109A
Patent document 5 : JP-A 2006-63095

DISCLOSURE OF INVENTION

The present invention aims at providing a hollow-fiber porous membrane of vinylidene fluoride resin having pores of an appropriate size (average pore size) and a further uniform pore size distribution in addition to a large water permeation rate, and a process for production thereof.

A further object of the present invention is to provide a hollow-fiber porous membrane of vinylidene fluoride resin exhibiting a large water permeability in spite of a relatively small average pore size, and a process for production thereof.

The porous membrane of vinylidene fluoride resin according to the present invention has been developed so as to accomplish the above-mentioned objects and comprises a hollow fiber-form porous membrane of vinylidene fluoride resin and satisfying the following properties (A) and (B); i.e., (A) a ratio Pmax (1 m)/Pm of at most 4.0 between a maximum pore size Pmax (1 m) measured at a test length of 1 m according to the bubble point method and an average pore size Pm of 0.05 - 0.20 $\mu$m measured according to the half dry method; and (B) a ratio F (L = 200 mm, v = 70 %)/Pm$^2$ of at least 3000 (m/day $\cdot$ $\mu$m$^2$), wherein the ratio F (L = 200 mm, v = 70 %)/Pm$^2$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a square Pm$^2$ of an average pore size Pm.

Herein, the above-mentioned property (A) of the hollow-fiber porous membrane of vinylidene fluoride resin according to the present invention represents a small average pore size and also a uniform pore size distribution, and the property (B) represents a large normalized water permeation rate F (L = 200 mm, v = 70 %) regardless of the small average pore size Pm. Particularly, the property (A) represents the absence of pinholes which are believed to be associated with the liability of a sub-peak on a larger pore size side in the hollow-fiber membrane obtained through the above-mentioned process of Patent document 5, and is particularly important in evaluating the performances of the hollow-fiber membrane of the present invention. At a test length of 10 - 20 mm generally adopted in measurement of maximum pore size Pmax according to the bubble point method, the measured Pmax values fluctuate sample to sample, but at a test length L increased up to 1 m, the rate of capturing pinholes is increased so that the presence or absence of pinholes in a sample of the objective hollow-fiber membrane can be surely judged. (Refer to Table 1 appearing hereinafter indicating the measurement of Pmax values for the hollow-fiber membranes produced according to Example 1 and Comparative Example 1 at an increased number of samples thereof). Further the test length of 1 m is also useful in evaluating the suitableness of a hollow-fiber membrane of vinylidene fluoride resin as a long hollow-fiber membrane because of a less increase in flow resistance through the hollow-fiber at a larger length.

As a result of the present inventors' study, it has been found effective to adopt a multi-stage relaxation treatment in a non-wetting environment instead of the relaxation in a wetting liquid adopted in the above-mentioned process of Patent document 5 for the purpose of producing the hollow-fiber porous membrane of vinylidene fluoride resin according to the present invention characterized by the above-mentioned properties (A) and (B). As a result, it becomes possible to obviate the generation of a sub-peak in particle size distribution leading to the formation of pinholes due to the relaxation in a wetting liquid in the process of Patent document 5. Thus, according to the present invention, there is also provided a process for producing a hollow-fiber porous membrane of vinylidene fluoride resin, comprising subjecting a stretched hollow-fiber porous membrane of vinylidene fluoride resin to at least two stages of relaxation treatment in a non-wetting environment.

At the time when the process of Patent document 5 was developed; the present inventors, et al., believed that the effect of increase in water permeation rate due to the relaxation in a wetting liquid was largely attributable to the effect of further extraction of residual plasticizer exposed to pore walls formed anew due to the stretching, but the present inventors now believe that the increase in water permeation rate is principally attributable to the transformation due to relaxation of an elongated oval-shape of pores formed immediately after the stretching to approach a true circle (giving a maximum aperture area at an identical circumferential length), in view of the effect of increase in water permeation rate attained by relaxation in non-wetting environment (of, typically, water or air) according to the present invention. The reason for a larger effect attained by the multi-stage (typically, two-stage) relaxation than a single-stage relaxation (as understood from a comparison between Example 3 and Comparative Example 5 appearing hereinafter) is not necessarily clear, but some assumptions may be possible such that the history of a first-stage relaxation generally performed under heating may advantageously affect the transformation to a true circle in a second-stage relaxation, and geometrically different relaxation mechanisms (e.g., two-dimensional one in addition to a single dimensional one) may be used in the two-stage relaxation process in view of the fact that the multi-stage relaxation resulted in a larger relaxation percentage than the single-stage relaxation for hollow-fibers of an identical stretch ratio. Further, such a larger relaxation percentage attained by the multi-stage relaxation can result in a larger increase in water permeation rate by that much.

Incidentally, Patent documents 2 and 3 also disclose a process for producing a hollow-fiber membrane of vinylidene fluoride resin including a relaxation treatment of a hollow-fiber membrane after stretching. However, the relaxation disclosed therein is a single-stage treatment and, while the combined effects of stretching-relaxation, a lowering in tensile modulus and an increase in water permeation rate were conceived, it was not clarified as to how the relaxation treatment after the stretching should be performed, particularly regarding a difference in increase of water permeation rate due to a difference in the relaxation treatment alone.

BRIEF DESCRIPTION OF THE DRAWING

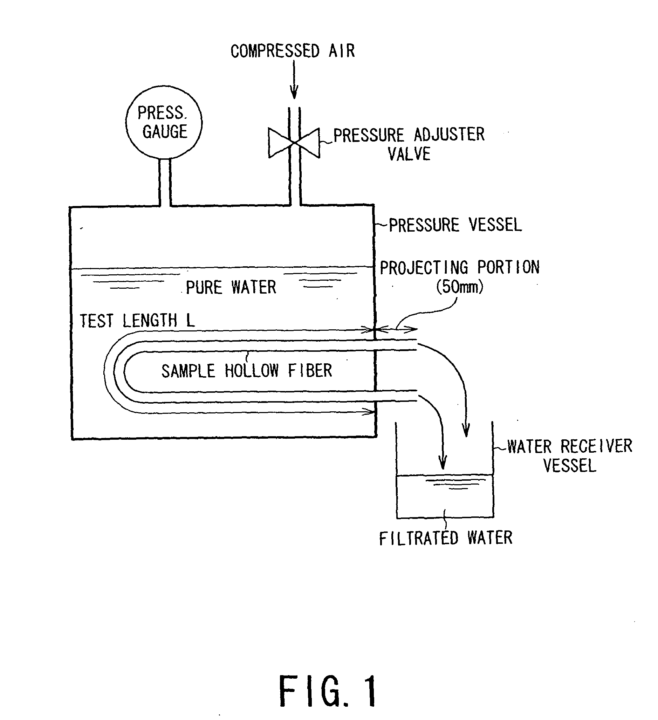

Fig. 1 is a schematic illustration of a water permeability-metering apparatus for evaluating water-treating performances of hollow-fiber porous membranes obtained in Examples and Comparative Examples.

BEST MODE FOR PRACTICING THE INVENTION

Hereinbelow, the hollow-fiber porous membrane of vinylidene fluoride resin of the present invention will be described in the order of the production process of the present invention that is a preferred process for production thereof.

(Vinylidene fluoride resin)

In the present invention, a vinylidene fluoride resin having a weight-average molecular weight of $2 \times 10^5$ - $6 \times 10^5$ is preferably used as a principal membrane-forming material. If Mw is below $2 \times 10^5$, the mechanical strength of the resultant porous membrane becomes small. On the other hand, if Mw exceeds $6 \times 10^5$, the texture of phase separation between the vinylidene fluoride resin and the plasticizer tends to become excessively fine to result in a porous membrane exhibiting a lower water permeation rate when used as a microfiltration membrane.

The vinylidene fluoride resin used in the present invention may be homopolymer of vinylidene fluoride, i.e., polyvinylidene fluoride, or a copolymer of vinylidene fluoride together with a monomer copolymerizable with vinylidene fluoride, or a mixture of these. Examples of the monomer copolymerizable with vinylidene fluoride may include: tetrafluoroethylene, hexafluoropropylene, trifluoroethylene, chlorotrifluoroethylene and vinylidene fluoride, which may be used singly or in two or more species. The vinylidene fluoride resin may preferably comprise at least 70 mol% of vinylidene fluoride as the constituent unit. Among these, it is preferred to use homopolymer consisting of 100 mol% of vinylidene fluoride in view of its high mechanical strength.

A vinylidene fluoride resin of a relatively high vinylidene fluoride content as described above may preferably be obtained by emulsion polymerization or suspension polymerization, particularly preferably by suspension polymerization.

The vinylidene fluoride resin forming the hollow-fiber porous membrane of the present invention is preferably one characterized by good crystallinity, i.e., a crystalline property of suppressing growth of spherulites but promoting the formation of network texture in the course of cooling, as represented by a difference Tm2 - Tc of at most 32°C, preferably at most 30°C, between an inherent melting point Tm2 (°C) and a crystallization temperature Tc (°C) of the resin as determined by DSC measurement in addition to the above-mentioned relatively large weight-average molecular weight of $2 \times 10^5$ - $6 \times 10^5$.

Herein, the inherent melting point Tm2 (°C) of resin should be distinguished from a melting point Tm1 (°C) determined by subjecting a procured sample resin or a resin constituting a porous membrane as it is to a temperature-increase process according to DSC. More specifically, a vinylidene fluoride resin procured generally exhibits a melting point Tm1 (°C) different from an inherent melting point Tm2 (°C) of the resin, due to thermal and mechanical history thereof received in the course of its production or heat-forming process, etc. The melting point Tm2 (°C) of vinylidene fluoride resin defining the present invention is defined as a melting point (a peak temperature of heat absorption according to crystal melting) observed in the course of DSC re-heating after once subjecting a procured sample resin to a prescribed temperature increase and decrease cycle in order to remove the thermal and mechanical history thereof, and details of the measurement method will be described prior to the description of Examples appearing hereinafter.

The condition of Tm2 - Tc ≤ 32°C representing the crystallinity of vinylidene fluoride resin forming the porous membrane of the present invention may possibly be accomplished, e.g., by a lowering in Tm2 according to copolymerization, but in this case, the resultant hollow fiber porous membrane is liable to have a lower chemical resistance in some cases. Accordingly, in a preferred embodiment of the present invention, there is used a vinylidene fluoride resin mixture formed by blending 70 - 98 wt.% of a vinylidene fluoride resin having a weight-average molecular weight molecular weight of $1.5 \times 10^5$ - $6 \times 10^5$ as a matrix (or principal) resin and 2-30 wt.% of a high-molecular weight vinylidene fluoride resin having an Mw that is at least 1.8 times, preferably at least 2 times, that of the former and at most $1.2 \times 10^6$, for crystallinity modification. According to such a method, it is possible to significantly increase the crystallization temperature Tc without changing the crystal melting point of the matrix resin alone (represented by Tm2 in a range of preferably 170 - 180°C). More specifically, by increasing Tc, in the case of a preferential cooling from an outer surface of a hollow-fiber film formed by melt extrusion, it becomes possible to accelerate the solidification of the vinylidene fluoride resin at a region from an inner portion of the film toward an inner surface, where the cooling is retarded compared with the film surface, thereby suppressing the growth of spherulites. Tc is preferably at least 143°C.

If Mw of the high-molecular weight vinylidene fluoride resin is below 1.8 times Mw of the matrix resin, it becomes difficult to sufficiently suppress the growth of spherulites. On the other hand, above $1.2 \times 10^6$, the dispersion thereof in the matrix resin becomes difficult.

Further, if the addition amount of the high-molecular weight vinylidene fluoride resin is below 2 wt.%, the effect of suppressing spherulite texture formation is liable to be insufficient, and in excess of 30 wt.%, the texture of phase separation between the vinylidene fluoride resin and the plasticizer is liable to become excessively fine, thus lowering the water permeation rate of the resultant membrane.

According to a preferred embodiment of the present invention, a plasticizer and a good solvent for vinylidene fluoride resin are added to the above-mentioned vinylidene fluoride resin to form a starting composition for formation of the membrane.

(Plasticizer)

The hollow-fiber porous membrane of the present invention is principally formed of the above-mentioned vinylidene fluoride resin, but for the production thereof, it is preferred to use at least a plasticizer for vinylidene fluoride resin as a pore-forming agent in addition to the vinylidene fluoride resin. As the plasticizer, aliphatic polyesters of a dibasic acid and a glycol may generally be used. Examples thereof may include: adipic acid-based polyesters of, e.g., the adipic acid-propylene glycol type, and the adipic acid-1, 3-butylene glycol type; sebacic acid-based polyesters of, e.g., the sebacic acid-propylene glycol type; and azelaic acid-based polyesters of, e.g., the azelaic acid-propylene glycol type, and azelaic acid-1, 3-butylene glycol type.

(Good solvent)

Further, in order to form the hollow-fiber membrane of the present invention through melt extrusion at a relatively low viscosity, it is preferred to use a good solvent for vinylidene fluoride resin in addition to the above-mentioned plasticizer. As the good solvent, those capable of dissolving vinylidene fluoride resin in a temperature range of 20 - 250°C may be used. Examples thereof may include: N-methylpyrrolidone, dimethylformamide, dimethylacetamide, dimethyl sulfoxide, methyl ethyl ketone, acetone, tetrehydrofuran, dioxane, ethyl acetate, propylene carbonate, cyclohexane, methyl isobutyl ketone, dimethyl phthalate, and solvent mixtures of these. N-methylpyrrolidone (NMP) is particularly preferred in view of its stability at high temperatures.

(Composition)

The starting composition for formation of the hollow-fiber membrane may preferably be obtained by mixing 100 wt. parts of the vinylidene fluoride resin with the plasticizer and the good solvent for vinylidene fluoride resin in a total amount of 100 - 300 wt. parts, more preferably 140 - 220 wt. parts, including 12.5-35 wt.% thereof, more preferably 15.0 - 32.5 wt.% thereof, of the good solvent.

If the total amount of the plasticizer and the good solvent is too small, the viscosity of the composition at the time of melt-extrusion becomes excessively high. If the total amount is too large, the viscosity is excessively lowered. In both cases, it becomes difficult to obtain a porous hollow-fiber having a uniformly and appropriately high porosity, and thus filtration performance (water permeability). Further, if the proportion of the good solvent in the total amount of the both components is below 12.5 wt.%, it becomes difficult to attain the effect of uniform pore size which is a characteristic of the present invention. On the other hand, if the proportion of the good solvent exceeds 35 wt.%, the crystallization of the resin in the cooling bath becomes insufficient, thus being liable to cause the collapse of the hollow-fiber, so that the formation of the hollow-fiber per se becomes difficult.

(Mixing and Melt-extrusion)

The melt-extrusion composition may be extruded into a hollow fiber film by extrusion through an annular nozzle at a temperature of 140 - 270°C, preferably 150 - 200°C. Accordingly, the manners of mixing and melting of the vinylidene fluoride resin, plasticizer and good solvent are arbitrary as far as a uniform mixture in the above-mentioned temperature range can be obtained consequently. According to a preferred embodiment for obtaining such a composition, a twin-screw kneading extruder is used, and the vinylidene fluoride resin (preferably in a mixture of a principal resin and a crystallinity-modifier resin) is supplied from an upstream side of the extruder and a mixture of the plasticizer and the good solvent is supplied at a downstream position to be formed into a uniform mixture until they pass through the extruder and are discharged. The twin-screw extruder may be provided with a plurality of blocks capable of independent temperature control along its longitudinal axis so as to allow appropriate temperature control at respective positions depending on the contents of the materials passing therethrough.

(Cooling)

Then, the melt-extruded hollow fiber film is cooled preferentially from an outside thereof and solidified by introducing it into a cooling liquid bath. In this instance, if the hollow-fiber film is cooled while an inert gas, such as air or nitrogen, is injected into the hollow part thereof, a hollow-fiber film having an enlarged diameter can be obtained. This is advantageous for obtaining a hollow-fiber porous membrane which is less liable to cause a lowering in water permeation rate per unit area of the membrane even at an increased length of the hollow-fiber membrane (WO2005/03700A). As the cooling liquid, a liquid which is inert (i.e., showing non-solvency and non-reactivity) with respect to vinylidene fluoride resin, is generally used, and preferably water is used. In some case, a good solvent for vinylidene fluoride resin (similar to those used in the above-mentioned melt-extrusion composition) which is miscible with the cooling liquid (preferably, NMP miscible with water) can be mixed at a proportion of 30 - 90 wt.%, preferably 40 - 80 wt.%, of the cooling liquid, so as to enlarge the pore size at the outer surface of the resultant hollow-fiber porous membrane, whereby it becomes possible to obtain a hollow-fiber porous membrane having a layer of minimum pore size inside the membrane, which is advantageous for regeneration by air scrubbing (WO2006/087963A The temperature of the cooling medium may be selected from a fairly wide temperature range of 0 - 120°C, but may preferably be in a range of 5 - 100°C, particularly preferably 5 - 80°C.

(Extraction)

The cooled and solidified hollow fiber film is then introduced into an extraction liquid bath to remove the plasticizer and the good solvent therefrom, thereby forming a hollow fiber membrane. The extraction liquid is not particularly restricted provided that it does not dissolve the vinylidene fluoride resin while dissolving the plasticizer and the good solvent. Suitable examples thereof may include: polar solvents having a boiling point on the order of 30 - 100°C, inclusive of alcohols, such as methanol and isopropyl alcohol, and chlorinated hydrocarbons, such as dichloromethane and 1,1,1-trichloroethane.

(Stretching)

The hollow-fiber film or membrane after the extraction may preferably be subjected to stretching in order to increase the porosity and pore size and improve the strength-elongation characteristic thereof. The stretching may preferably be effected as a uniaxial stretching in the longitudinal direction of the hollow-fiber membrane by means of, e.g., a pair of rollers rotating at different circumferential speeds. This is because it has been found that a microscopic texture including a stretched fibril portion and a non-stretched node portion appearing alternately in the stretched direction is preferred for the hollow-fiber porous membrane of vinylidene fluoride resin of the present invention to exhibit a harmony of porosity and strength-elongation characteristic thereof. The stretching ratio may suitably be on the order of 1.2 - 4.0 times, particularly 1.4 - 3.0 times. If the stretching ratio is too low, it becomes impossible to attain a large relaxation percentage either so that it becomes difficult to attain the effect of increasing the water permeation rate. Further, at an excessively large stretching ratio, the hollow-fiber membrane can be broken at a high liability. The stretching temperature may preferably be 25 - 90°C, particularly 45 - 80°C. At too low a stretching temperature, the stretching becomes nonuniform, thus being liable to cause the breakage of the hollow-fiber membrane. On the other hand, at an excessively high temperature, enlargement of pore sizes cannot be attained even at an increased stretching ratio, so that it becomes difficult to attain an increased water permeation rate even after the relaxation. It is preferred to heat-treat the hollow-fiber film or membrane for 1 sec. - 18000 sec., preferably 3 sec. - 3600 sec., in a temperature range of 80 - 160°C, preferably 100 - 140°C, to increase the crystallinity in advance of the stretching for the purpose of improving the stretchability.

According to the process of the present invention, the hollow-fiber porous membrane of vinylidene fluoride resin obtained through the above-mentioned steps is subjected to at least two stages of relaxation treatment in a non-wetting environment (or medium). The non-wetting environment may be formed of non-wetting liquids having a surface tension (JIS K6768) larger than a wet tension of vinylidene fluoride resin, typically water, or almost all gases including air as a representative, particularly gases which do not condense around room temperature and vapors of the above-mentioned non-wetting liquids. In order to attain a large relaxation effect by a treatment at a relatively low temperature for a short period, it is preferred to effect a treatment with a non-wetting liquid having a large heat capacity and a large heat conductivity (i.e., a wet heat treatment), but it is also preferably adopted to apply a treatment within a heated gas (or vapor) at a sufficiently high relaxation temperature (i.e., a dry heat treatment). It is preferred to apply a wet heat treatment within water at 25 - 100°C, particularly 50 - 100°C, and/or a dry heat treatment with air (or steam) at 80 - 160°C. It is particularly preferred to apply a two-stage relaxation treatment including a first stage of wet heat treatment in water and a second stage of wet heat treatment in water or dry heat treatment in air (or steam).

The relaxation in each stage may be effected by passing a hollow-fiber porous membrane stretched in advance through the above-mentioned non-wetting, preferably heated environment disposed between an upstream roller and a downstream roller rotating at successively decreasing circumferential speeds. The relaxation percentage determined by (1 - (the downstream roller circumferential speed/the upstream roller circumferential speed)) $\times$ 100 (%) may preferably be 2 - 20 % for each stage and ca. 4 - 30 % as a total relaxation percentage. At a relaxation percentage of below 2 % in each stage, the multi-stage relaxation may lose its significance, thus making it difficult to achieve the desired effect of increasing the water permeation rate. This also holds true with the case of a total relaxation percentage of below 4 %. On the other hand, a relaxation percentage exceeding 20 % in each stage or a total relaxation percentage exceeding 30 % is difficult to realize or, even if possible, can only result in a saturation or even a decrease of the effect of increasing the water permeation rate, while it may somewhat depend on the stretching ration in the previous step, so that it is not desirable.

The time of relaxation treatment in each stage can be short or long, as far as a desired relaxation percentage can be attained. It is ordinarily on the order of 5 seconds to 1 minute, but it is not necessary to be within the range.

A remarkable effect of the above-mentioned multi-stage relaxation treatment is an increase in water permeation rate of the resultant hollow-fiber porous membrane, whereas the pore size distribution is not substantially changed and the porosity tends to be somewhat lowered. The thickness of the porous membrane is not substantially changed, whereas the inner diameter and the outer diameter of the hollow-fiber membrane tend to be increased.

It is also possible to apply a heat treatment at a relaxation percentage of 0 %, i.e., a heat setting treatment, after the multi-stage relaxation treatment of the present invention.

(Hollow-fiber porous membrane of vinylidene fluoride resin)

The hollow-fiber porous membrane of vinylidene fluoride resin according to the present invention obtained through the above-mentioned series of steps is characterized by: (A) a ratio Pmax (1 m)/Pm of at most 4.0 between a maximum pore size Pmax (1 m) measured at a test length of 1 m according to the bubble point method and an average pore size Pm of 0.05 - 0.20 $\mu$m measured according to the half dry method; and (B) a ratio F (L = 200 mm, v = 70 %) /Pm$^2$ of at least 3000 (m/day $\cdot$ $\mu$m$^2$), wherein the ratio F (L = 200 mm, v = 70 %)/Pm$^2$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a square Pm$^2$ of an average pore size Pm. Now, a measurement method adopted in the present invention for evaluating the property (A) will be described.

(A) The bubble point/half point method is a method or methods according to ASTM $\cdot$ F316-86 and ASTM $\cdot$ E 1294-86 for measuring a maximum pore size Pmax and a pore size distribution of a porous membrane, particularly suited for a hollow-fiber porous membrane. More specifically, according to the bubble point method, a compressed air is supplied into a sample hollow-fiber porous membrane soaked in a test liquid at gradually increasing pressures to determine an air pressure at which a first bubble is generated in the test liquid, and a maximum pore size Pmax ($\mu$m) of the sample membrane is calculated from the air pressure. According to the half dry method, an air pressure is determined for a sample hollow-fiber porous membrane at an intersection of a wet flow curve as a flow curve obtained in the state of the sample membrane being wetted with the test liquid and a half dry curve which is defined as a line having a slope of half inclination with respect to a dry flow curve measured in a dry state of the sample membrane, and an average pore size Pm ($\mu$m) is calculated from the air pressure. These values described herein are based on values measured by using "PALM POROMTER CFP-2000AEX" made by Porous Materials, Inc., as a measuring instrument and perfluoropolyester (trade name: "GALWICK") as a test liquid. Hollow-fiber membranes having a test length of ca. 10 mm are ordinarily used as samples. In the present invention, however, in addition to the measurement of maximum pore size Pmax and average pore size Pm at a test length L = 10 mm, a measurement of a maximum pore size Pmax (1 m) by using a hollow-fiber membrane at a test length of 1 m is performed in order to surely capture pinholes occurring during the production of hollow-fiber membranes regardless of fluctuation of the production conditions. Incidentally, Table 1 below shows 5 measured values of Pmax (1 m) and an average thereof measured for 5 samples each taken from hollow-fiber membranes prepared in Example 1 and Comparative Example 1 described hereinafter in parallel with measured values of Pmax (10 mm) for the same hollow-fiber membranes. From the results shown in Table 1, it is believed understandable that the inclination of pinhole occurrence can be surely evaluated based on the values of Pmax (1m).
[Table 1]

| Pmax(1m) and Pmax(10mm) | | | | | | | (unit:$\mu$m) |
|---|---|---|---|---|---|---|---|
| Sample No. | Pmax(1m) | | | | | | Pmax(10mm) |
| | 1 | 2 | 3 | 4 | 5 | Average | |
| Example 1 | 0.266 | 0.364 | 0.305 | 0.272 | 0.267 | 0.295 | 0.259 |
| Comp. Example 1 | 0.815 | 0.912 | 0.848 | 0.921 | 0.760 | 0.851 | 0.269 |

The hollow-fiber porous membrane of the present invention is characterized by an average pore size Pm of 0.05 - 0.20 $\mu$m, preferably 0.08 - 0.18 $\mu$m, as measured at a test length L = 10 mm; a ratio Pmax (1 m)/Pm of at most 4.0, preferably at most 3.0, as a ratio of the above-mentioned Pmax (1 m) measured at a test length L = 1 m to the Pm. If the average pore size Pm is below 0.05 $\mu$m, the porous membrane is caused to have a lower water permeation rate. On the other hand, if Pm exceeds 0.20 $\mu$m, the ability of removing minute particles (such as turbidity sources and bacteria) is lowered. The ratio Pmax (1 m)/Pm of at most 4.0 means that the hollow-fiber porous membrane of the present invention includes very few abnormally large pores (pinholes) in addition to a uniform pore size distribution. The lower limit of Pmax (1 m)/Pm is not particularly restricted, but it is difficult to realize a value smaller than 1.5.
(B) Another characteristic feature of the hollow-fiber porous membrane of the present invention is that it exhibits a large water permeation rate (or water permeability) relative to a small average pore size (that is, a good communicativeness of pores). This characteristic is represented by a ratio F (L = 200 mm, v = 70 %)/Pm$^2$ of at least 3000 (m/day$\cdot$$\mu$m$^2$), preferably at least 3500 (m/day$\cdot$$\mu$m$^2$), wherein the ratio F (L = 200 mm, v = 70 %)/Pm$^2$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a square $Pm^2$ of an average pore size Pm. Describing more specifically, if it is assumed that a relationship between a water permeation rate and an (average) pore size follows the Hagen-Poiseuille law, the water permeation rate is proportional to a 4-th power of the (average) pore size while the number of pores is assumed to be inversely proportional to the square of average pore size, so that the water permeation rate is proportional to the square of (average) pore size. The present inventors have acquired experimental results that the square law does not hold true at different porosities but the water permeation rate is proportional to the porosity and have found that the square law between the water permeation rate and the average pore size holds true satisfactorily at a normalized constant porosity (70 % in the present invention) and, based on the relationship, the above-mentioned F (L = 200 mm, v = 70 %) provides a good index of water permeability including a contribution of the capability of removing minute particles based on the good communicativeness of pores in a porous membrane. The property (B) of the hollow-fiber porous membrane of the present invention is based on this knowledge. The method for measurement of the water permeation rate per se is described hereinafter.

Other general features of hollow-fiber porous membranes obtained according to the present invention may include: a porosity of 55 - 90 %, preferably 60 - 85 %, particularly preferably 65 - 80 %; a tensile strength of at least 6 MPa; an elongation at break of at least 5 %. Further, the thickness is ordinarily in the range of 5 - 800 μm, preferably 50 - 600 μm, particularly preferably 150 - 500 μm. The outer diameter of the hollow fiber may suitably be on the order of 0.3 - 3 mm, particularly ca. 1 - 3 mm.

Further, a micro-texture characteristic of the hollow-fiber porous membrane according to the present invention obtained through the stretching is that it comprises a crystalline oriented portion and a crystalline non-oriented portion (random oriented portion) recognizable by X-ray diffraction, which are understood as corresponding to a stretched fibril portion and a non-stretched node portion, respectively.

EXAMPLES

Hereinbelow, the present invention will be described more specifically based on Examples and Comparative Examples. The properties described herein including those described below are based on measured values according to the following methods.

(Weight-average molecular weight (Mw))

A GPC apparatus ("GPC-900", made by Nippon Bunko K.K.) was used together with a column of "Shodex KD-806M" and a pre-column of "Shodex KD-G" (respectively made by Showa Denko K.K.), and measurement according to GPC (gel permeation chromatography) was performed by using NMP as the solvent at a flow rate of 10 ml/min. at a temperature of 40°C to measure polystyrene-based molecular weights.

(Crystalline melting points Tm1, Tm2, crystal melting enthalpy and Crystallization Temperature Tc)

A differential scanning calorimeter "DSC-7" (made by Perkin-Elmer Corp.) was used. A sample resin of 10 mg was set in a measurement cell, and in a nitrogen gas atmosphere, once heated from 30°C up to 250°C at a temperature-raising rate of 10°C/min., then held at 250°C for 1 min. and cooled from 250°C down to 30°C at a temperature-lowering rate of 10°C/min., thereby to obtain a DSC curve. On the DSC curve, an endothermic peak temperature in the course of heating was determined as a melting point Tm1 (°C), and a heat of absorption by the endothermic peak giving Tm1 was measured as a crystal melting enthalpy. Further, an exothermic peak temperature in the course of cooling was determined as a crystallization temperature Tc(°C). Successively thereafter, the sample resin was held at 30°C for 1 min., and re-heated from 30°C up to 250°C at a temperature-raising rate of 10°C/min. to obtain a DSC curve. An endothermic peak temperature on the re-heating DSC curve was determined as an inherent melting point Tm2 (°C) defining the crystallinity of vinylidene fluoride resin in the present invention.

(Porosity)

The length and also the outer diameter and inner diameter of a sample hollow fiber porous membrane were measured to calculate an apparent volume V ($cm^3$) of the porous membrane, and the weight W (g) of the porous membrane was measured to calculate a porosity according to the following formula:

$$\text{Porosity (\%)} = (1 - W/(V \times \rho)) \times 100,$$

wherein p: density of PVDF (= 1.78 g/cm$^3$).

(Water permeation rate or water permeability)

A sample hollow-fiber porous membrane having a test length L (as shown in Fig. 1) = 200 mm or 800 mm was immersed in ethanol for 15 min., then immersed in water to be hydrophilized, and then subjected to a measurement of water permeation rate per day (m$^3$/day) at a water temperature of 25°C and a pressure difference of 100 kPa, which was then divided by a membrane area of the hollow-fiber porous membrane (m$^2$) (= outer diameter $\times$ $\pi$ $\times$ test length L) to provide a water permeation rate. The resultant value is indicated, e.g., as F (100 kPa, L = 200 mm) for a sample having a test length L = 200 mm, in the unit of m/day (= m$^3$/m$^2$ · day). It is known that as the test length L is increased, the water permeation rate per unit membrane area is generally lowered due to an increase in flow resistance through the hollow fiber, so that a basic water permeation rate Fo (m/ day) was obtained by extrapolating the measured values F at test lengths L = 200 mm and 800 mm to L = 0 mm.

Further, a water permeation rate F (100 kPa, L = 200 mm) measured at a test length L = 200 mm was normalized at a porosity v = 70 % to obtain F (L = 200 mm, v = 70 %) according to the following formula:

$$F\ (L = 200\ mm,\ v = 70\ \%)$$

= F (100 kPa, L = 200 mm) $\times$ (70 (%)/v (%)), and a ratio thereof to the square of average pore size Pm of F (L = 200 mm, v = 70 %)/Pm$^2$ was obtained as a pure water permeation flux representing a communicativeness of pores, thereby evaluating a water permeability while taking capability of removing minute particles into consideration.

(Measurement of number of general bacteria)

The number of general bacteria, i.e., medium-temperature aerobic bacteria, was measured by inoculating 1 mL of test water into ca. 20 mL of standard agar medium (as a composition, containing 2.5 g of yeast extract, 5 g of peptone, 1 g of D-glucose and 15 g of agar in 1000 mL; pH 7.1 $\pm$ 0.1), placed in a 100 mm-dia. Petri dish, culturing it for 48 hours at 36 $\pm$ 1°C, and counting the number of colonies visible by naked eyes.

In order to evaluate the cleaning ability of sample hollow-fiber membranes, a surface flowing water of Koisegawa-river taken in Ishioka-city, Ibaraki-prefecture was used as a supply water. The number of general bacteria in the supply water was 330/mL.

A sample hollow-fiber porous membrane having a test length L (as shown in Fig. 1) = 800 mm was immersed in ethanol for 15 min., then immersed in pure water to be hydrolyzed and, after discharging the pure water, the pressure-resistant vessel was filled with the supply water. After that, filtration was performed while retaining a pressure of 50 kPa in the vessel to recover a filtered water, which was then subjected to the above-mentioned measurement of number of general bacteria. The tap water standard in Japan stipulates that the number of colonies should be at most 100 in 1 mL.

(Example 1)

A principal polyvinylidene fluoride (PVDF) (powder) having a weight-average molecular weight (Mw) of 4.12 x 10$^5$ and a crystallinity-modifier polyvinylidene fluoride (PVDF) (powder) having Mw = 9.36 $\times$ 10$^5$ were blended in proportions of 95 wt.% and 5 wt.%, respectively, by a Henschel mixer to obtain a PVDF mixture having Mw = 4.38 $\times$ 10$^5$.

An adipic acid-based polyester plasticizer ("PN-150", made by Asahi Denka Kogyo K.K.) as an aliphatic polyester and N-methylpyrrolidone (NMP) as a solvent were mixed under stirring in a ratio of 77.5 wt.%/22.5 wt.% at room temperature to obtain a plasticizer-solvent mixture.

An equi-directional rotation and engagement-type twin-screw extruder ("BT-30", made by Plastic Kogaku Kenkyusyo K.K.; screw diameter: 30 mm, L/D = 48) was used, and the PVDF mixture was supplied from a powder supply port at a position of 80 mm from the upstream end of the cylinder and the plasticizer-solvent mixture heated to 160°C was supplied from a liquid supply port at a position of 480 mm from the upstream end of the cylinder at a ratio of PVDF mixture/plasticizer-solvent mixture = 35.7/64.3 (wt.%), followed by kneading at a barrel temperature of 220°C to extrude the melt-kneaded product through a nozzle having an annular slit of 7 mm in outer diameter and 5 mm in inner diameter into a hollow fiber-form extrudate at a rate of 7.6 g/min. In this instance, air was injected into a hollow part of the fiber at a rate of 4.2 mL/min. through an air supply port provided at a center of the nozzle.

The extruded mixture in a molten state was introduced into a cooling bath of water maintained at 40°C and having a surface 280 mm distant from the nozzle (i.e., an air gap of 280 mm) to be cooled and solidified (at a residence time in the cooling bath of ca. 6 sec.), pulled up at a take-up speed of 5 m/min. and wound up about a reel of ca. 1 m in diameter to obtain a first intermediate form.

Then, the first intermediate form was immersed under vibration in dichloromethane at room temperature for 30 min., followed by immersion in fresh dichloromethane again under the same conditions to extract the plasticizer and solvent and further by 1 hour of heating in an oven at 120°C for removal of the dichloromethane and heat treatment, thereby to obtain a second intermediate form.

Then, the second intermediate form was longitudinally stretched at a ratio of 2.2 times by passing it by a first roller at a speed of 8.0 m/min., through a water bath at 60°C and by a second roller at a speed of 17.6 m/min. Then, the intermediate form was caused to pass through a bath of warm water controlled at 90°C and by a third roller at a lowered speed of 15.1 m/min. to effect a 14 %-relaxation treatment in the water bath. The form was further caused to pass through a dry heating bath (of 2.0 m in length) controlled at a spatial temperature of 140°C and by a fourth roller at a lowered speed of 14.5 m/min. to effect a 4 %-relaxation treatment in the dry heating bath and was taken up to provide a polyvinylidene fluoride-based hollow-fiber porous membrane (a third form) according to the process of the present invention.

The resultant polyvinylidene fluoride-based hollow-fiber porous membrane exhibited an outer diameter of 1.275 mm, an inner diameter of 0.836 mm, a membrane thickness of 0.219 mm, a porosity of 69.9 %, pure water permeabilities F (L, 100 kPa) at a pressure difference of 100 kPa including F (L = 200 mm, 100 kPa) = 86.7 m/day at a test length L = 200 mm, F (L = 200 mm, v = 70 %) = 86.8 m/day as a value normalized at a porosity of 70 %, F (L = 800 mm, 100 kPa) = 73.5 m/day and a basic water permeability Fo (L = 0 mm, 100 kPa) = 91.1 m/day, an average pore size Pm = 0.135 $\mu$m, a maximum pore size Pmax (10 mm) = 0.259 $\mu$m at a test length of 10 mm, Pmax (10 mm)/Pm = 1.9, and a ratio F (L = 200 mm, v = 70 %)/Pm$^2$ = 4745. Further, the number of general bacteria in the filtered water was 0/mL.

The production conditions and physical properties of the thus-obtained polyvinylidene fluoride-based hollow-fiber porous membrane are inclusively shown in Table 2 appearing hereinafter together with the results of the following Examples and Comparative Examples.

(Example 2)

A hollow-fiber porous membrane was prepared in the same manner as in Example 1 except for changing the ratio of the components in the plasticizer-solvent mixture to 82.5 wt.%/ 17.5 wt.%, the composition extrusion rate to 16.7 g/min., the air supply rate through the air supply port at the nozzle center to 9.5 mL/min., the water-bath temperature to 40°C, the take-up speed to 11.0 m/min., the stretching ratio to 1.85 times, the first-stage relaxation to 8 % by wet heat at 90°C, and the second-stage relaxation to 4 % by dry heat at 140°C, respectively.

(Example 3)

A hollow-fiber porous membrane was prepared in the same manner as in Example 2 except for changing the composition extrusion rate to 15.0 g/ min., the air supply rate through the air supply port at the nozzle center to 6.5 mL/min., the take-up speed to 10.0 m/min., the heat-treatment temperature to 80°C, the first-stage relaxation to 8 % by dry heat at 140°C, and the second-stage relaxation to 2 % by dry heat at 140°C, respectively.

(Comparative Example 1)

A hollow-fiber porous membrane was prepared in the same manner as in Example 1 except for changing the air supply rate through the air supply port at the nozzle center to 4.5 mL/min., the stretching ratio to 1.9 times, the first-stage relaxation to 5 % in the medium of dichloromethane, and the second-stage relaxation to 5 % by dry heat at 140°C, respectively.

(Comparative Example 2)

A hollow-fiber porous membrane was prepared in the same manner as in Example 3 except for changing the air supply rate through the air supply port at the nozzle center to 7.0 mL/min., the heat treatment temperature to 120°C, the first-stage relaxation to 5 % in the medium of dichloromethane, and the second-stage relaxation to 5 % by dry heat at 140°C, respectively.

(Comparative Example 3)

A hollow-fiber porous membrane was prepared in the same manner as in Example 3 except for changing the heat-treatment temperature to 120°C, omitting the relaxation treatments and performing a heat-setting by dry heat at 140°C instead thereof.

(Comparative Example 4)

A hollow-fiber porous membrane was prepared in the same manner as in Example 3 except for omitting the relaxation treatments and performing two stages of heat setting by dry heat at 140°C instead thereof.

(Comparative Example 5)

A hollow-fiber porous membrane was prepared in the same manner as in Example 3 except for changing the first-stage relaxation to 10 % by dry heat at 140°C, omitting the second-stage relaxation and performing heat-setting by dry heat at 140°C.
The production conditions of the above-described Examples and Comparative Examples, and the physical properties of the resultant hollow-fiber porous membranes are inclusively shown in the following Table 2.
[Table 2]

| | Example | | 1 | 2 | 3 | Comp. 1 | Comp. 2 | Comp. 3 | Comp. 4 | Comp. 5 |
|---|---|---|---|---|---|---|---|---|---|---|
| Starting material composition | PVDF mixture Mw ($\times 10^5$) | | 4.38 | 4.38 | 4.38 | 4.38 | 4.38 | 4.38 | 4.38 | 4.38 |
| | Plasticizer solvent mixture plasticizer/ solvent (wt.ratio) | | 72.5/27.5 | 82.5/17.5 | 82.5/17.5 | 72.5/27.5 | 82.5/17.5 | 82.5/17.5 | 82.5/17.5 | 82.5/17.5 |
| | PVDF/plasticizer solvent supply ratio (wt.ratio) | | 35.7/64.3 | 35.7/64.3 | 35.7/64.3 | 35.7/64.3 | 35.7/64.3 | 35.7/64.3 | 35.7/64.3 | 35.7/64.3 |
| Production conditions | Strting material feed rate (g/min.) | | 7.6 | 16.7 | 15.0 | 7.6 | 15.0 | 15.0 | 15.0 | 15.0 |
| | Air supply rate (mL/min.) | | 4.2 | 9.5 | 6.5 | 4.5 | 7.0 | 6.5 | 6.5 | 6.5 |
| | Water bath temp. (°C) | | 50 | 40 | 40 | 50 | 40 | 40 | 40 | 40 |
| | Take-up speed (m/min) | | 5.0 | 11.0 | 10.0 | 5.0 | 10.0 | 10.0 | 10.0 | 10 |
| | Extraction bath | | $CH_2Cl_2$ | $CH_2Cl_2$ | $CH_2Cl_2$ | $CH_2Cl_2$ | $CH_2Cl_2$ | $CH_2Cl_2$ | $CH_2Cl_2$ | $CH_2Cl_2$ |
| | Dry heat temp. (°C) | | 120 | 120 | 80 | 120 | 120 | 120 | 80 | 80 |
| | Stretch temp. (°C) | | 60 | 60 | 60 | 60 | 60 | 60 | 60 | 60 |
| | Stretch ratio (-) | | 2.2 | 1.85 | 1.85 | 1.9 | 1.85 | 1.85 | 1.85 | 1.85 |
| | Relaxation | 1st-stage: conditions | Wet heat 90°C | Wet heat 90°C | Dry heat 140°C | Wetting* | Wetting* | none | Dry heat 140°C | Dry heat 140°C |
| | | relaxation % | 14% | 8% | 8% | 5% | 5% | | 0% | 0% |
| | | 2nd-stage: conditions | Dry heat 140°C | Dry heat 140°C | Dry heat 140°C | Dry heat 140°C | Dry heat 140°C | Dry heat 140°C | Dry heat 140°C | Dry heat 140°C |
| | | relaxation % | 4% | 4% | 2% | 5% | 5% | 0% | 0% | 0% |

(continued)

| | Example | 1 | 2 | 3 | Comp. 1 | Comp. 2 | Comp. 3 | Comp. 4 | Comp. 5 |
|---|---|---|---|---|---|---|---|---|---|
| Physical properties | Outer diameter (mm) | 1.275 | 1.368 | 1.247 | 1.305 | 1.297 | 1.208 | 1.187 | 1.242 |
| | Inner diameter (mm) | 0.836 | 0.878 | 0.758 | 0.841 | 0.807 | 0.738 | 0.723 | 0.758 |
| | Thickness (mm) | 0.219 | 0.245 | 0.244 | 0.232 | 0.245 | 0.235 | 0.232 | 0.242 |
| | Porosity v (%) | 69.9 | 71.1 | 69.7 | 70.4 | 70.7 | 70.5 | 68.8 | 69.1 |
| | Average pore size Pm ($\mu$m) | 0.135 | 0.115 | 0.107 | 0.126 | 0.105 | 0.105 | 0.096 | 0.106 |
| | Pmax(10mm) ($\mu$m) | 0.259 | 0.207 | 0.172 | 0.269 | 0.203 | 0.195 | 0.162 | 0.186 |
| | Pmax(1mm) ($\mu$m) | 0.295 | 0.266 | 0.208 | 0.851 | 0.753 | 0.251 | 0.208 | 0.251 |
| | Pmax(10mm)/Pm | 1.91 | 1. 80 | 1.61 | 2.14 | 1. 93 | 1.86 | 1. 69 | 1.75 |
| | Pmax(1m)/Pm | 2.18 | 2.31 | 1.95 | 6.75 | 7.17 | 2.39 | 2.17 | 2.36 |
| | Water permeability F (100kPa. L=200mm) (m/day) | 86.7 | 47.2 | 37.3 | 85.7 | 44 | 30. 8 | 26.6 | 33.1 |
| | Water permeability F (100kPa. L=800mm) (m/day) | 73.5 | 43. 2 | 31.9 | 72.5 | 39.5 | 27.3 | 23.0 | 28.8 |
| | Basic water permability Fo (100kPa. L=0mm) (m/day) | 91.1 | 48. 5 | 39.1 | 90.1 | 45.5 | 32.0 | 27.8 | 34.5 |
| | Normalized water permeability F (L=200mm, v=70%) (m/day) | 86.8 | 46.5 | 37.5 | 85.2 | 43.6 | 30.6 | 27.1 | 33.5 |
| | F (L=200mm, v=70%)/Pm$^2$ (m/day · $\mu$m$^2$) | 4745 | 3514 | 3286 | 5408 | 3951 | 2774 | 2936 | 2974 |
| | Number of general bacteria (-/mL) | 0 | 0 | 0 | 5 | 3 | 0 | 0 | 0 |
| * Wetting liquid: dichloromethane (=$CH_2Cl_2$), 25°C. | | | | | | | | | |

13

The results in the above Table 2 show that the hollow-fiber porous membrane of the present invention obtained by subjecting a stretched hollow-fiber porous membrane of vinylidene fluoride resin to two stages of relaxation treatment in a non-wetting environment (wet heat with warm water and/or dry heated air) exhibited performances, which are very suitable for water treatment, including both (A) a stably narrow pore size distribution represented by a Pmax (1 m)/Pm of at most 4.0 and (B) a large water permeation rate in combination with good minute particle-blocking performance as represented by F (L = 200 mm, v = 70 %)/Pm$^2$ of at least 3000. In contrast thereto, the products of Comparative Examples 1 and 2 wherein the first-stage relaxation treatment was performed in a liquid (dichloromethane) wetting vinylidene fluoride resin, exhibited a large effect of increasing the water permeation rate but resulted in Pmax (1 m)/Pm > 4.0 which suggests the formation of pinholes leading to passing-by of general bacteria during water filtration. On the other hand, the products of Comparative Examples 3 and 4 obtained without substantial relaxation treatment and the product of Comparative Example 5 obtained through a single-stage of relaxation treatment in a non-wetting environment, failed to exhibit (B) the effect of increasing the water permeation rate at a desired level.

**Claims**

1.  A hollow-fiber porous membrane, comprising a hollow fiber-form porous membrane of vinylidene fluoride resin and satisfying the following properties (A) and (B):

     (A) a ratio Pmax (1 m)/Pm of at most 4.0 between a maximum pore size Pmax (1 m) measured at a test length of 1 m according to the bubble point method and an average pore size Pm of 0.05 - 0.20 $\mu$m measured according to the half dry method; and
     (B) a ratio F (L = 200 mm, v = 70 %)/Pm$^2$ of at least 3000 (m/day · $\mu$m$^2$), wherein the ratio F (L = 200 mm, v = 70 %)/Pm$^2$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a square Pm$^2$ of an average pore size Pm.

2.  A hollow-fiber porous membrane according to Claim 1, wherein the ratio Pmax (1 m)/Pm is at most 3.0.

3.  A hollow-fiber porous membrane according to Claim 1 or 2, wherein the ratio F (L = 200 mm, v = 70 %)/Pm$^2$ is at least 3500 (m/day · $\mu$m$^2$).

4.  A process for producing a hollow-fiber porous membrane of vinylidene fluoride resin, comprising: subjecting a stretched hollow-fiber porous membrane of vinylidene fluoride resin to at least two stages of relaxation treatment in a non-wetting environment.

5.  A production process according to Claim 4, wherein the non-wetting environment for the two stages of relaxation treatment comprises water and / or air.

6.  A production process according to Claim 5, wherein the water and/or air comprises water at 50 - 100°C and/or air or steam at 80 - 160°C.

7.  A production process according to Claim 5 or 6, wherein the non-wetting environment for the two stages of relaxation treatment successively comprise water, and air or steam.

8.  A production process according to any one of Claims 4-7, wherein the two stages of relaxation are performed at relaxation percentages of 2 - 20 % for each stage and totally 4 - 30 %.

9.  A production process according to any one of Claims 4-8, wherein the stretched hollow-fiber porous membrane of vinylidene fluoride resin has been formed by melt-extruding into a hollow-fiber film a starting mixture comprising the vinylidene fluoride resin and at least a plasticizer for vinylidene fluoride resin, followed by cooling, extraction of the plasticizer and stretching.

10. A production process according to Claim 9, wherein the starting mixture further comprises a good solvent for vinylidene fluoride resin.

COMPRESSED AIR

PRESS.
GAUGE

PRESSURE ADJUSTER
VALVE

~PRESSURE VESSEL

PROJECTING PORTION
(50mm)

PURE WATER

TEST LENGTH L

SAMPLE HOLLOW FIBER

~WATER RECEIVER
VESSEL

FILTRATED WATER

# FIG. 1

<table>
<tr><td colspan="2" align="center">**INTERNATIONAL SEARCH REPORT**</td><td>International application No.<br>PCT/JP2006/318028</td></tr>
</table>

| A. CLASSIFICATION OF SUBJECT MATTER |
|---|
| *B01D71/34*(2006.01)i, *B01D69/08*(2006.01)i, *D01D5/247*(2006.01)i, *D01F6/12* (2006.01)i |

According to International Patent Classification (IPC) or to both national classification and IPC

| B. FIELDS SEARCHED |
|---|

Minimum documentation searched (classification system followed by classification symbols)
B01D71/34, B01D69/08, D01D5/247, D01F6/12

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)
CAplus(STN)

| C. DOCUMENTS CONSIDERED TO BE RELEVANT |
|---|

| Category* | Citation of document, with indication, where appropriate, of the relevant passages | Relevant to claim No. |
|---|---|---|
| P,X | JP 2006-63095 A  (Kureha Corp.), 09 March, 2006 (09.03.06), Comparative example 6 (Family: none) | 1-10 |
| A | WO 2002/070115 A1  (Asahi Kasei Corp.), 12 September, 2002 (12.09.02), Full text & US 2003/0107150 A1    & EP 1369168 A1 & CA 2407859 A1          & AU 6949801 A & CN 1441692 A | 1-10 |
| A | JP 2003-41450 A  (Mitsubishi Rayon Co., Ltd.), 13 February, 2003 (13.02.03), Claims 8 to 10; Par. Nos. [0008], [0020] to [0048] (Family: none) | 1-10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 November, 2006 (21.11.06) | Date of mailing of the international search report<br>28 November, 2006 (28.11.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/318028 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-210954 A  (Toray Industries, Inc.), 29 July, 2003 (29.07.03), Full text (Family: none) | 1-10 |
| A | JP 2-263845 A  (Terumo Corp.), 26 October, 1990 (26.10.90), Page 10, upper left column, lines 11 to 18 & US 5202025 A | 1-10 |
| A | WO 2005/032700 A1  (Kureha Chemical Industry Co., Ltd.), 14 April, 2005 (14.04.05), Particularly, examples; table 1 & CA 2540471 A | 1-10 |
| A | WO 2004/081109 A1  (Kureha Chemical Industry Co., Ltd.), 23 September, 2004 (23.09.04), Particularly, examples; tables & CA 2518948 A | 1-10 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63296939 A
- JP 63296940 A
- JP 3215535 A
- WO 2004081109 A
- JP 2006063095 A
- WO 200503700 A
- WO 2006087963 A